# EUROPEAN PATENT SPECIFICATION

(11) **EP 2 607 991 B1**
(45) Date of publication and mention of the grant of the patent: **12.12.2018**
(21) Application number: 12198928.9
(22) Date of filing: 21.12.2012
(51) Int. Cl.: G06F 21/62

(54) **Autonomous access control**
Autonome Zugangssteuerung
Commande d'accès autonome

(30) Priority: 22.12.2011 US 201161579224 P
(43) Date of publication of application: 26.06.2013
(73) Proprietor: BlackBerry Limited, Waterloo, ON N2K 0A7 (CA)
(72) Inventor: Major, Daniel Jonas, Kanata, ON K2K 0B3 (CA); Jackson, Eli Omen, Waterloo, ON N2J 1K7 (CA)
(74) Representative: Hanna Moore + Curley

(56) References cited:
- US-A1- 2004 203 768
- Anonymous: "Airplane mode - Wikipedia, the free encyclopedia", , 24 November 2011 (2011-11-24), XP055220850, Retrieved from the Internet: URL:https://en.wikipedia.org/w/index.php?t itle=Airplane_mode&oldid=462301613 [retrieved on 2015-10-14]

## Description

### CROSS-REFERENCE TO RELATED APPLICATION

This application claims the benefit of United States Provisional Patent Application No. 61/579,224, entitled "Autonomous Access Control", filed December 22, 2011.

### TECHNICAL FIELD

Embodiments described herein relate generally to controlling access between components and resources available on a computing device.

### BACKGROUND

Computing devices may be used for a variety of applications. Computing devices employ a plurality of software and hardware components that interact with one another to provide device functionality. Generally, a component may request access to a resource available on the computing device. The resource may be, or may be serviced by, another component that acts as an access component to service requests made by a requesting component.

Determining whether to grant a particular component access to a requested resource typically requires explicit permissions, specified by a user of the computing device for example.

Various access control heuristics are known in the art. For instance, many devices employ an airplane mode (see, for instance, Wikipedia, "Airplane mode" from 24 November 2011) that automatically blocks some functionalities of the device while permitting others.

US 2004/203768 A1 discloses a method to automatically activate access control policies according to the location of the device.

### BRIEF DESCRIPTION OF THE DRAWINGS

For a better understanding of the described embodiments and to show more clearly how they may be carried into effect, reference will now be made, by way of example, to the accompanying drawings in which:
FIG. 1 is a block diagram of an example embodiment of a computing device;
FIG. 2 is a block diagram of an embodiment of a communication subsystem component of the computing device of FIG. 1;
FIG. 3 is a block diagram illustrating an embodiment of a prior art computing device;
FIGS. 4a and 4b are block diagrams illustrating embodiments of an autonomous access controller for a computing device, in accordance with at least one embodiment;
FIG. 5 is a flowchart diagram illustrating a process for controlling actions associated with a plurality of resources available on a computing device, in accordance with at least one embodiment;
FIG. 6 is a flowchart diagram illustrating a process of modifying which action associated with at least one resource is mapped to a usage preference, in accordance with at least one embodiment; and
FIG. 7 is a flowchart diagram illustrating a process of modifying which at least one resource is mapped to a usage preference, in accordance with at least one embodiment.

### DESCRIPTION OF VARIOUS EMBODIMENTS

In one broad aspect, there is provided a method of controlling actions associated with a plurality of resources available on a computing device. The method may include: presenting, in a user interface, a request for a usage preference that indicates a manner in which the computing device is preferred to be used; in response to the request, receiving input indicating the usage preference; determining an action for at least one resource of the plurality of resources that is to be controlled in order to satisfy the usage preference, wherein the determining is performed according to a heuristic that maps the usage preference to the action for the at least one resource; and controlling whether or not to allow the action to be performed for the at least one resource mapped to the usage preference; wherein the request for the usage preference or the input identifying the usage preference does not explicitly indicate that the determined action for the at least one resource is to be controlled in order to satisfy the usage preference.

In some embodiments, the request for the usage preference or the input identifying the usage preference does not explicitly indicate one or more actions associated with the at least one resource that are to be controlled to satisfy the usage preference.

In some embodiments, one or more states of the computing device are considered when controlling whether or not to allow the action to be performed for the at least one resource.

In some embodiments, the action for the at least one resource is selected from a plurality of actions for the at least one resource based on the one or more states of the computing device.

In some embodiments, the request is provided in the form of a query, and the input identifying the usage preference includes an answer to the query.

In some embodiments, the heuristic is modifiable as to which action of a plurality of actions for the at least one resource is mapped to the usage preference.

In some embodiments, if the action for the at least one resource mapped to the usage preference is modified, the method further includes controlling whether or not to allow the modified action to be performed for the at least one resource.

In some embodiments, the heuristic is modifiable as to which resources are mapped to the usage preference.

In some embodiments, if the at least one resource mapped to the usage preference is modified, the method further includes controlling whether or not to allow performance of any given action associated with the modified at least one resource.

In some embodiments, the action can be performed by a process executing on the computing device.

In some embodiments, the action can be performed by an application executable on the computing device.

In some embodiments, the action may include modifying a setting associated with the at least one resource.

In some embodiments, the usage preference includes prolonging battery life of the computing device, and the action for the at least one resource includes at least one of: activating a vibration function of the computing device, modifying a brightness of a display of the computing device, or using a wireless radio on the computing device.

In some embodiments, the usage preference includes limiting wireless carrier costs incurred when the computing device is roaming, and the action for the at least one resource includes at least one of: creating a message, communicating a message, conducting a telephone call, or accessing a data service.

In some embodiments, the usage preference includes providing assistance when the computing device is being transported in a vehicle, and the action for the at least one resource includes at least one of: accessing a keyboard on the computing device, or adjusting a speaker volume on the computing device.

In some embodiments, the usage preference includes restrict the tracking of keystrokes entered on a keyboard of the computing device, and the action for the at least one resource includes at least one of: accessing a keystroke-tracking Application Programming Interface (API), or reading information from the accelerometer of the computing device.

In another broad aspect, there is provided a computing device comprising a processor and a memory, wherein the processor is capable of: presenting, in a user interface, a request for a usage preference that indicates a manner in which the computing device is preferred to be used; in response to the request, receiving input indicating the usage preference; determining an action for at least one resource of the plurality of resources that is to be controlled in order to satisfy the usage preference, wherein the determining is performed according to a heuristic that maps the usage preference to the action for the at least one resource; and controlling whether or not to allow the action to be performed for the at least one resource mapped to the usage preference; wherein, the request for the usage preference or the input identifying the usage preference does not explicitly indicate that the determined action for the at least one resource is to be controlled in order to satisfy the usage preference.

In some embodiments, the request for the usage preference or the input identifying the usage preference does not explicitly indicate one or more actions associated with the at least one resource that are to be controlled to satisfy the usage preference.

In another broad aspect, there is provided a non-transitory computer-readable storage medium comprising instructions, which when executed by a processor of a computing device, cause the processor to perform acts of a method of controlling actions associated with a plurality of resources available on a computing device, wherein the method includes: presenting, in a user interface, a request for a usage preference that indicates a manner in which the computing device is preferred to be used; in response to the request, receiving input indicating the usage preference; determining an action for at least one resource of the plurality of resources that is to be controlled in order to satisfy the usage preference, wherein the determining is performed according to a heuristic that maps the usage preference to the action for the at least one resource; and controlling whether or not to allow the action to be performed for the at least one resource mapped to the usage preference; wherein the request for the usage preference or the input identifying the usage preference does not explicitly indicate that the determined action for the at least one resource is to be controlled in order to satisfy the usage preference.

In some embodiments, the request for the usage preference or the input identifying the usage preference does not explicitly indicate one or more actions associated with the at least one resource that are to be controlled to satisfy the usage preference.

In an additional embodiment, a method is provided for a computing device controlling access to a resource of the computing device. The method may comprise a decision engine of the computing device: receiving a request for access to the resource from a requesting component; determining whether the requesting component is authorized to access the resource, by utilizing one or more states of the computing device with a security model previously defined by the decision engine; and, when the requesting component is authorized to access the resource, providing access to the requesting component.

In an aspect of the method, the security model may set, for each of the one or more states, a corresponding threshold level, and wherein the utilizing comprises inputting the one or more states to the decision engine and applying the corresponding threshold for each of the one or more states and the determining comprises allowing access to the resource when the one or more states exceed the corresponding threshold levels. In an aspect, the one or more states may comprise a plurality of states and the setting the corresponding threshold levels comprises the decision engine setting a combination threshold level for a combination of the plurality of states.

In an aspect of the method, the security model may specify one or more criteria for allowing access including a security level, a cost level or a power consumption level.

In an aspect of the method, the security model may set a threshold level and set, for each of the one or more states, a corresponding weight, and wherein the utilizing comprises inputting the one or more states to the decision engine and applying the corresponding weight for each of the one or more states and the determining comprises allowing access to the resource when the one or more weighted states exceeds the threshold level.

In an aspect of the method, the security model may be defined based upon a general permissions policy.

In an aspect of the method, the general permission policy may comprise user answers to general security questions.

In an aspect of the method, the decision engine may define the security model by assigning, for each of the one or more states, a corresponding threshold level.

In an aspect of the method, the decision engine may define the security model by assigning, for each of the one or more states, a corresponding weight.

In an aspect of the method, the one or more states may comprise a plurality of states, and wherein the decision engine may further define the corresponding weight of at least one of the plurality of states to be dependent upon a level of another of the plurality of states.

In an embodiment, a computing device may be provided for executing the above methods. In an aspect, the computing device may comprise a processor operative to carry out acts of the above methods.

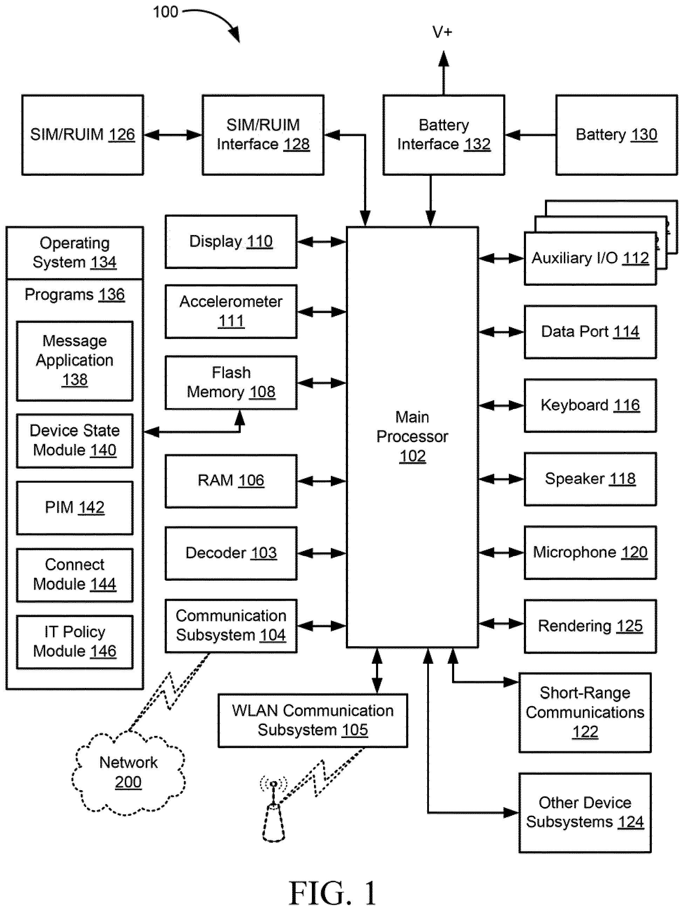

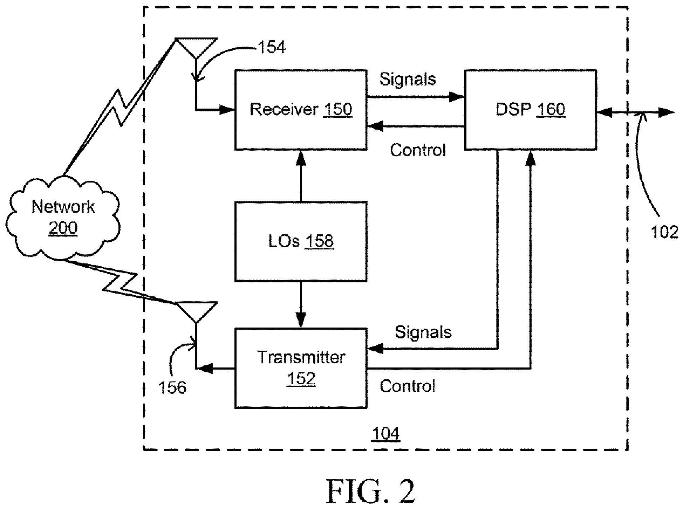

The embodiments described herein may be implemented on a computing device such as the communication device illustrated, by way of example, in FIGS. 1 and 2. The communication device may communicate with other devices over a wireless communication system or enterprise system. The communication device 100 may be a mobile device with two-way communication and advanced data communication capabilities including the capability to communicate with other mobile devices or computer systems through a network of transceiver stations. The communication device 100 can also have voice communication capabilities.

FIG. 1 is a block diagram of an example embodiment of a communication device 100. The communication device 100 includes a number of components such as a main processor 102 that controls the overall operation of the communication device 100. Communication functions, including data and voice communications, are performed through a communication subsystem 104. Data received by the communication device 100 can be decompressed and decrypted by decoder 103, operating according to any suitable decompression techniques, and encryption/decryption techniques according to various standards, such as Data Encryption Standard (DES), Triple DES, or Advanced Encryption Standard (AES)). Image data is typically compressed and decompressed in accordance with appropriate standards, such as JPEG, while video data is typically compressed and decompressed in accordance with appropriate standards, such as H.26x and MPEG-x series standards.

The communication subsystem 104 receives messages from and sends messages to a wireless network 200. In this example embodiment of the communication device 100, the communication subsystem 104 is configured in accordance with one or more of Global System for Mobile Communication (GSM), General Packet Radio Services (GPRS) standards, Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM, GPRS, EDGE, or UMTS, and optionally other network communications. With newer network protocols, these channels are capable of supporting both circuit switched voice communications and packet switched data communications.

Other wireless networks can also be associated with the communication device 100 in variant implementations. The different types of wireless networks that can be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks, third-generation (3G) networks like EDGE, HSPA, HSPA+, EVDO and UMTS, or fourth-generation (4G) networks such as LTE and LTE Advanced. Some other examples of data-centric networks include WiFi 802.11™, Mobitex™ and DataTAC™ network communication systems. Examples of other voice-centric data networks include Personal Communication Systems (PCS) networks like GSM and Time Division Multiple Access (TDMA) systems. The mobile device 100 may be provided with additional communication subsystems, such as the wireless LAN (WLAN) communication subsystem 105 also shown in FIG. 1. The WLAN communication subsystem may operate in accordance with a known network protocol such as one or more of the 802.11™ family of standards developed by IEEE. The communication subsystem 105 may be separate from, or integrated with, the communication subsystem 104 or with the short-range communications module 122. The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, the short-range communications subsystem 122 and other device subsystems 124. The communication device may also be provided with an accelerometer 111, which may be used to detect gravity or motion-induced forces and their direction. Detection of such forces applied to the device 100 may be processed to determine a response of the device 100, such as an orientation of a graphical user interface displayed on the display assembly 110 in response to a determination of the current orientation of the device 100.

Some of the subsystems of the communication device 100 perform communication-related functions, whereas other subsystems can provide "resident" or on-device functions. By way of example, the display 110 and the keyboard 116 can be used for both communication-related functions, such as entering a text message for transmission over the network 200, and device-resident functions such as a calculator or task list.

A rendering circuit 125 may be included in the device 100. When a user specifies that a data file is to be viewed on the display 110, the rendering circuit 125 analyzes and processes the data file for visualization on the display 110. Rendering data files originally optimized or prepared for visualization on large-screen displays on a portable electronic device display often requires additional processing prior to visualization on the small-screen portable electronic device displays. This additional processing may be accomplished by the rendering engine 125. As will be appreciated by those of skill in the art, the rendering engine can be implemented in hardware, software, or a combination thereof, and can comprise a dedicated image processor and associated circuitry, or can be implemented within main processor 102.

The communication device 100 can send and receive communication signals over the wireless network 200 after required network registration or activation procedures have been completed. Network access is associated with a subscriber or user of the communication device 100. To identify a subscriber, the communication device 100 requires a SIM/RUIM card 126 (i.e. Subscriber Identity Module or a Removable User Identity Module) or another suitable identity module to be inserted into a SIM/RUIM interface 128 in order to communicate with a network. The SIM/RUIM card 126 is one type of a conventional "smart card" that can be used to identify a subscriber of the communication device 100 and to personalize the communication device 100, among other things. Without the SIM/RUIM card 126, the communication device 100 is not fully operational for communication with the wireless network 200. By inserting the SIM/RUIM card 126 into the SIM/RUIM interface 128, a subscriber can access all subscribed services. Services can include: web browsing and messaging such as e-mail, voice mail, Short Message Service (SMS), and Multimedia Messaging Services (MMS). More advanced services can include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM/RUIM card 126 can include some user parameters such as an International Mobile Subscriber Identity (IMSI). An advantage of using the SIM/RUIM card 126 is that a subscriber is not necessarily bound by any single physical mobile device. The SIM/RUIM card 126 can store additional subscriber information for a mobile device as well, including datebook (or calendar) information and recent call information. Alternatively, user identification information can also be programmed into the flash memory 108.

The communication device 100 may be a battery-powered device including a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the communication device 100. Although current technology makes use of a battery, future technologies such as micro fuel cells can provide the power to the communication device 100.

The communication device 100 also includes an operating system 134 and software components 136 to 146 which are described in more detail below. The operating system 134 and the software components 136 to 146 that are executed by the main processor 102 are typically stored in a persistent store such as the flash memory 108, which can alternatively be a read-only memory (ROM) or similar storage element (not shown). Those skilled in the art will appreciate that portions of the operating system 134 and the software components 136 to 146, such as specific device applications, or parts thereof, can be temporarily loaded into a volatile store such as the RAM 106. Other software components can also be included, as is well known to those skilled in the art.

The subset of software applications 136 that control basic device operations, including data and voice communication applications, will normally be installed on the communication device 100 during its manufacture. Other software applications include a message application 138 that can be any suitable software program that allows a user of the communication device 100 to send and receive electronic messages. Various alternatives exist for the message application 138 as is well known to those skilled in the art. Messages that have been sent or received by the user are typically stored in the flash memory 108 of the communication device 100 or some other suitable storage element in the communication device 100. In at least some embodiments, some of the sent and received messages can be stored remotely from the device 100 such as in a data store of an associated host system that the communication device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the communication device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items can be seamlessly integrated, synchronized, and updated via the wireless network 200 with the mobile device subscriber's corresponding data items stored and/or associated with a host computer system. This functionality creates a mirrored host computer on the communication device 100 with respect to such items. This can be particularly advantageous when the host computer system is the mobile device subscriber's office computer system. Some or all of the data items stored at the communication device 100 may be indexed for searching on the device 100 either through a corresponding application, such as the PIM 142, or another suitable module. In addition, the items may be searchable using a unified search process implemented in the device operating system 134. For example, application data items can be encapsulated in a searchable entity class and registered with a unified search engine on the device 100 that executes searches against all registered data repositories on the device based on received queries. The search engine can also be configured to invoke a search process of external resources, such as Internet search engines or remote databases.

The communication device 100 also includes a connect module 144, and an information technology (IT) policy module 146. The connect module 144 implements the communication protocols that are required for the communication device 100 to communicate with the wireless infrastructure and any host system, such as an enterprise system, that the communication device 100 is authorized to interface with.

The connect module 144 includes a set of Application Programming Interfaces (APIs) that can be integrated with the communication device 100 to allow the communication device 100 to use any number of services associated with the enterprise system or with other systems accessible over the network 200. The connect module 144 allows the communication device 100 to establish an end-to-end secure, authenticated communication pipe with the host system. A subset of applications for which access is provided by the connect module 144 can be used to pass IT policy commands from the host system to the communication device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the communication device 100. These software applications can be third party applications, which are added after the manufacture of the communication device 100. Examples of third party applications include games, calculators, utilities, etc.

The additional applications can be loaded onto the communication device 100 through at least one of the wireless network 200, the auxiliary I/O subsystem 112, the data port 114, the short-range communications subsystem 122, or any other suitable device subsystem 124. This flexibility in application installation increases the functionality of the communication device 100 and can provide enhanced on-device functions, communication-related functions, or both. For example, secure communication applications can enable electronic commerce functions and other such financial transactions to be performed using the communication device 100.

The data port 114 enables a subscriber to set preferences through an external device or software application and extends the capabilities of the communication device 100 by providing for information or software downloads to the communication device 100 other than through a wireless communication network. The alternate download path can, for example, be used to load an encryption key onto the communication device 100 through a direct and thus reliable and trusted connection to provide secure device communication. The data port 114 can be any suitable port that enables data communication between the communication device 100 and another computing device. The data port 114 can be a serial or a parallel port. In some instances, the data port 114 can be a USB port that includes data lines for data transfer and a supply line that can provide a charging current to charge the battery 130 of the communication device 100.

The short-range communications subsystem 122 provides for communication between the communication device 100 and different systems or devices, without the use of the wireless network 200. For example, the subsystem 122 can include an infrared device and associated circuits and components for short-range communication. Examples of short-range communication standards include standards developed by the Infrared Data Association (IrDA), Bluetooth™, Near Field Communication (NFC), and the 802.11™ family of standards.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber can also compose data items, such as e-mail messages, for example, using the keyboard 116 in conjunction with the display 110 and possibly the auxiliary I/O subsystem 112. The auxiliary subsystem 112 can include devices such as: a touchscreen, mouse, track ball, infrared fingerprint detector, or a roller wheel with dynamic button pressing capability. The keyboard 116 may be an alphanumeric keyboard and/or telephone-type keypad. However, other types of keyboards can also be used. A composed item can be transmitted over the wireless network 200 through the communication subsystem 104. It will be appreciated that if the display 110 comprises a touchscreen, then the auxiliary subsystem 112 may still comprise one or more of the devices identified above.

For voice communications, the overall operation of the communication device 100 is substantially similar, except that the received signals are output to the speaker 118, and signals for transmission are generated by the microphone 120. Alternative voice or audio I/O subsystems, such as a voice message recording subsystem, can also be implemented on the communication device 100. Although voice or audio signal output is accomplished primarily through the speaker 118, the display 110 can also be used to provide additional information such as the identity of a calling party, duration of a voice call, or other voice call related information.

FIG. 2 shows an example block diagram of the communication subsystem component 104. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the communication device 100 is intended to operate. Thus, it should be understood that the design illustrated in FIG. 2 serves only as one example.

Signals received by the antenna 154 through the wireless network 200 are input to the receiver 150, which can perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 can be adaptively controlled through automatic gain control algorithms implemented in the DSP 160.

The wireless link between the communication device 100 and the wireless network 200 can contain one or more different channels, typically different RF channels, and associated protocols used between the communication device 100 and the wireless network 200. An RF channel is a limited resource that should be conserved, typically due to limits in overall bandwidth and limited battery power of the communication device 100. When the communication device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods. Other communication subsystems, such as the WLAN communication subsystem 105 shown in FIG. 1, may be provided with similar components as those described above configured for communication over the appropriate frequencies and using the appropriate protocols.

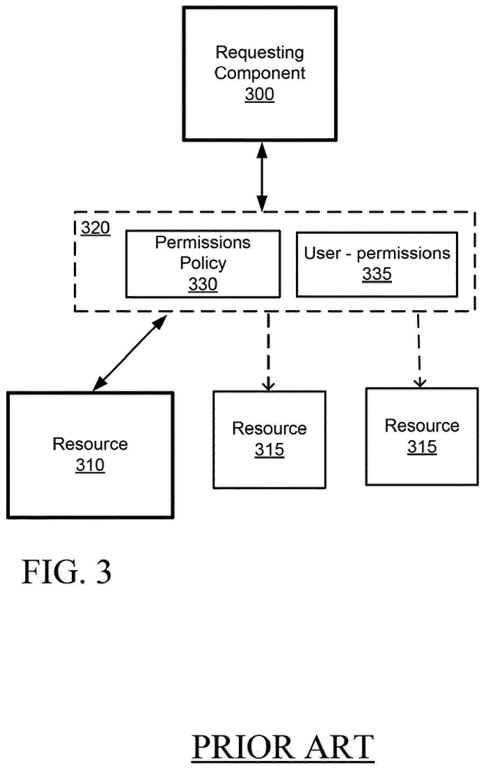

Referring to FIG. 3, a known method of controlling access to resources available on a computing device, such as communication device 100, is illustrated in simplified block diagram form. A requesting component 300, such as an application operative on a processing unit of the computing device, may seek access to a resource 310. In order to gain access to the resource 310, the request made by the requesting component 300 is directed through an access component 320. The access component 320 may be specific to a particular resource 310, or, as illustrated in FIG. 3, may service requests to multiple resources 310, 315.

For instance, a request to access data retained in a data store (resource 310) of the computing device may be controlled by a file system (access component 320). Access to memory (resource 310) or permission to execute a process on the processing unit (resource 310) may be controlled by the operating system (access component 320). Access to calendar entries stored in a data store (resource 310) may be controlled by a calendar application (access component 320) that maintains the calendar entries and provides functionality to access information stored within the calendar entries.

In the example of FIG. 3, the access component 320 performs a gatekeeper function that filters requests based upon a set of rules or policy, such as a permissions policy 330. The rules may include user-permissions 335 that assign rights to a particular user.

The access component 320 evaluates a status of the requesting component 300 and compares the status with access permissions defined in the permissions policy 330 and/or the user-permissions 335. The permissions policy 330 may be a set of access rules as determined by a user of the computing device, within the scope of the user permissions 335 assigned to that user. Alternatively, the permissions policy 330 may be set by an administrator system (e.g. an IT administrator system at an enterprise).

By way of example, the requesting component 300 may comprise an application requesting access to data stored in a data store of the computing device. In the example, the access component 320 may comprise the file system that controls the data store. The file system may assign permissions to particular data items stored within the data store that limit access to specific users, or specific actions that may be taken such as read or write access. The permissions may be specifically set by the permissions policy 330, for instance where a user has created a particular data item or file and assigned permissions to the file such as read-only or read-and-write permissions. Upon receiving the request for access to the data, the file system may evaluate the user of the requesting component 300 and compare the requesting user with the permissions policy 330 and user-permissions 335 to determine whether to grant access to the data.

By way of an alternate example, the requesting component 300 may comprise an application requesting access to initiate a process on the computing device. In the alternate example, the access component 320 may comprise an operating system of the computing device that controls access to system resources, such as resource 310, to allow a new process to be spawned. The operating system may evaluate the requesting component 300 and its user to determine user permissions 335 and compare the request and associated user permissions 335 with permissions specified in a permissions policy 330.

If the application is not a trusted application, as defined by the comparison with the permissions policy 330, the operating system may prompt the user with a query as to whether to allow the application to spawn the process. For instance, a driver update program may seek access to the Internet to obtain an update. If the operating system is able to identify the driver update program as a trusted application, it may allow the driver update program access to the Internet. If, however, the operating system cannot identify the driver update program as a trusted application, it may prompt the user with a query as to whether the user would like to allow the driver update program access to the Internet.

In both examples, the access component 320 makes decisions based upon a limited set of fixed rules and permissions at the time of request. The rules and permissions having been explicitly defined by the user in a permissions policy 330. The access component 320 further makes its decisions whether to grant access permission by applying the permissions policy 330 to the requesting component 300, user permissions 335 of a current user, and an identity of the resource 310. Other non-requested resources 315 are not considered when determining whether to grant access to the requesting component 300.

Depending upon the request made, the user may be queried at the time the access component 320 is making the determination to grant access to a specified resource 310. The query solicits permission from the user for that requesting component 300 to be granted permission to access the specified resource 330 at that moment in time. This query may arise, for instance, where a requesting component 300 may not be specifically enumerated in the permissions policy 330.

User preferences for granting permissions may be defined by a list of specific permissions within a permissions policy 330 defined for each user. Each requesting component 300 is associated with a specific permission for that user. Some prior attempts to simplify the definition of permissions have focussed on pre-defining a template of "default" permissions within the permissions policy 330 and labelling the template with a generic term such as "secure" or "low", "medium" and "high" security, for instance. A user may select a template from the options. The selection imposes the default permissions for that template. The label distances the user from the specific permissions defined in the template permissions policy 330 for each requesting component 300 or resource 310, but still effectively results in the user specifying a list of specific permissions explicitly to grant each requesting component 300 access to a resource 310.

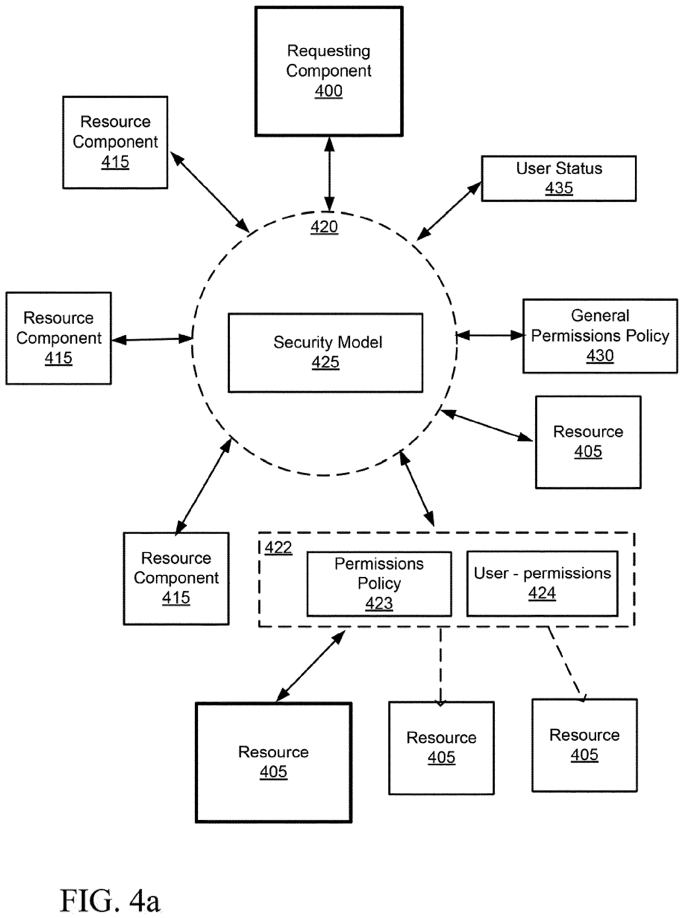

Referring to FIG. 4a, in an embodiment, a computing device, such as communication device 100, may be provided that is operative to control access by a requesting component 400 to resources 405 available on the computing device, such as applications executing on the computing device, information stored on a data store of the computing device, or hardware components accessible to the computing device. Some or all of the resources 405 may be accessible through one or more access components 422 that provide the functionality to access the some or all of the resources 405. The computing device may further be operative to control access to one or more resource components 415 that are accessible by the computing device, but not controlled by an access component 320.

Referring to FIG. 4a, for instance, a decision engine 420 may be provided that controls access by a requesting component 400 requesting access to resources 405 available on the computing device. In the embodiment of FIG. 4a, the decision engine 420 is interposed between the requesting component 400, and resources 405 and resource components 415.

In the embodiment of FIG. 4a, an access component 422 is illustrated as being interposed between the decision engine 420 and some of the resources 405 available on the computing device. In the embodiment of FIG. 4a, access component 422 includes similar functionality as described above in relation to access component 320 illustrated in FIG. 3. While not illustrated in FIG. 4a, more than one access component 422 may be interposed between the decision engine 420, with each of the more than one access components 422 providing access to one or more resources 405.

In an embodiment, one or more resources 405 may be connected directly to the decision engine 420, without an access component 422 being interposed. Generally, an access component 422 may be present where it is required to control access to a resource 405 as described above in relation to FIG. 3. The access component 422 may further comprise a permissions policy 423 and user permissions 424 for the resources 405 under the control of that access component 422 as described above in relation to access component 320. By way of example, the access component 422 may comprise a file system and files stored in the file system may comprise the resource 405. The permissions policy 423 and user permissions 424 may comprise standard permissions on a file-by-file basis for files stored on the file system.

The decision engine 420 is operative to receive a request for access to a resource 405 or resource component 415 from a requesting component 400. In one embodiment, the decision engine 420 takes as inputs one or more states of the computing device, which may include, for example, states of one or more of the resource components 415 and a user status 435.

The decision engine 420 may apply the one or more states of the computing device to a security model 425 to determine whether the requesting component 400 is authorized to access the resource 405. The security model 425 governs how the decision engine 420 combines inputs and sets threshold levels for granting requested access. When the requesting component 400 is authorized to access the resource 405, the decision engine 420 allows access.

The security model 425 is maintained by the decision engine 420 to reflect the general permissions policy 430 defined by a user of the computing device. The general permissions policy 430 currently in effect is reflected in the security model 425, but may not be directly applied as an input at a time of determining access to a resource 405.

The general permissions policy 430 may comprise a set of answers to general questions asked of a user of the computing device relating to security, rather than a specific set of permissions dictating rights of access to specific resources 405. The user may be asked security questions at a time other than an access time when a requesting component 400 requests access to a resource, for example, in advance (e.g., when the user is configuring the computing device prior to first use). The user's response to the general questions defines the general permissions policy.

The decision engine 420 may receive the general permissions policy 430, and apply the general permissions policy 430 to the security model 425. The security model 425 defines inputs to be considered by the decision engine 420 for each right of access, and optionally, a weight to be applied to each input. The selection of inputs and corresponding weights are determined by processing the general permissions policy 430 and the user's answers to general security questions. Generally, the security model 425 may be generated and be in effect before the decision engine 420 receives a request for access from the requesting component 400 and determines whether to grant access. Accordingly, collection of input from the user is not contemporaneous with a decision to grant access to a resource 405.

In an aspect, the decision engine 420 may apply the general permissions policy 430 to set one or more parameters of the security model 425. In an aspect, the one or more parameters may comprise a threshold level for an input to the decision engine 420. The input may comprise, for instance a state of a resource component 415 or a state of a user status 435. In embodiments where the decision engine 420 receives a plurality of inputs, the decision engine 420 may set a combination of threshold levels, each threshold level corresponding to one of the inputs.

The decision engine 420 applies the states as inputs to the security model 425 to determine whether a request for access to a particular resource 405 should be granted. The decision engine 420 tests each input state against the threshold level specified by the security model 425 and allows access to the resource 405 when a level of a sufficient number of input states exceeds the corresponding threshold level.

In an embodiment, the decision engine 420 may test each input state against a corresponding threshold level. The decision engine 420 may calculate a running sum of the input states that meet or exceed the corresponding threshold level, and allow access when a sufficient number of input states met the threshold. The sufficient number may further be defined in the security model 425.

In an embodiment, the decision engine 420 may apply multiple criteria when determining whether to grant access. For instance, the decision engine 420 may calculate a running sum of input state levels to evaluate the threshold level, or may evaluate an input state threshold level for each input and only include input states that meet an input threshold. In an aspect, the decision engine 420 may require a combination of multiple input states to meet a combined threshold level.

In the embodiment of FIG. 4a, the decision engine 420 is operative as a security layer above, and in addition to, the access component 422 for one or more of the resources 405 being accessed. In the embodiment illustrated, the access component 422 may further apply a permissions policy 423, as described above in relation to FIG. 3.

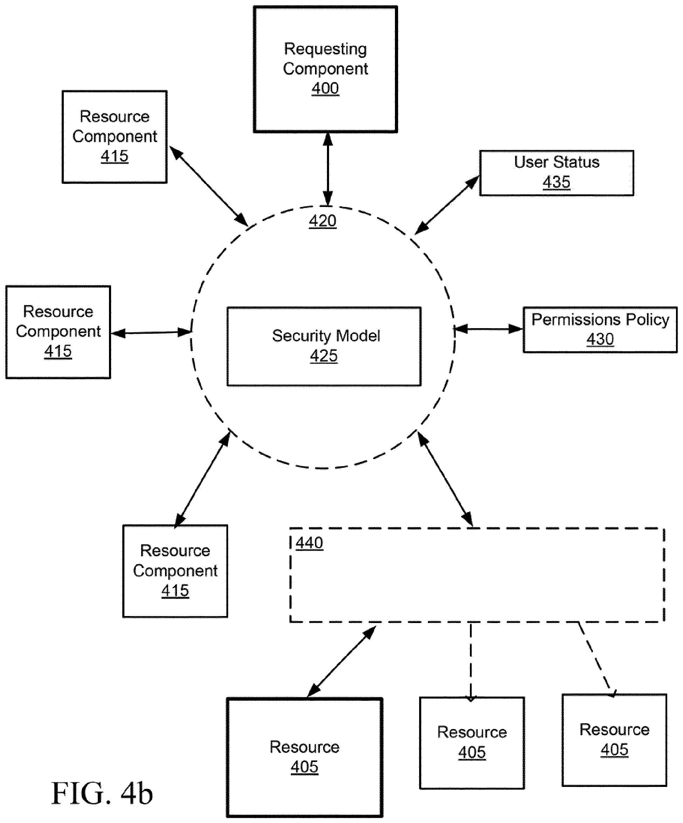

Referring to FIG. 4b, in an embodiment, the access component 440 may be operative to provide access to a resource 405 as directed by the decision engine 420. In the embodiment of FIG. 4b, resource permissions may be obtained from the resource 405 by the access component 440 and supplied as inputs to the decision engine 420. While the access component 440 does not determine rights of access, it does provide the functionality to access the resource 405. By way of example, the access component 440 may comprise a file system that stores and retrieves data from a data store. The decision engine 420 lacks the functionality to store and retrieve data, and relies upon the access component 440 to provide the functionality under the control and direction of the decision engine 420.

In both embodiments, the decision engine 420 provides a de-coupling between the permissions policy 430 that is set by a user and the mechanism and rules used to enforce rights of access. The de-coupling allows for a fine-grained control of access based upon various states of the computing device and its components. While prior art solutions require explicit instructions from a user for each resource, typically at a time of access request, the embodiments of the present application allow a user to indicate in a general policy criteria including security, cost or power consumption, for example, and leave specific interpretation of the policy for each access request to the decision engine 420 for determination at a time of the request in view of one or more states of the computing device at that time.

For instance, a requesting component 400 such as an application that has been installed by a user may be selected by the user to be trusted at a time of installation. Subsequent requests for access to some resources 405 may be allowed without prompting the user for permission given the trusted status of the requesting component 400. Regular requests by a trusted requesting component 400 for access to a network connection to update a driver, for instance, may be allowed by the decision engine 420. A request by the trusted requesting component 400 that requests unusual access may be flagged by the decision engine 420, refused, and presented to a user in an off-line mode for review at a user's convenience.

Accordingly, the de-coupling further allows for a temporal disconnect between queries presented to a user through a presentation layer and the enforcement carried out by the decision engine 420. For instance, the user may enter data to be associated with a general permissions policy 430 which is applied by the decision engine 420 to create a security model 425. Requests for access by requesting components 400 may be evaluated by the decision engine 420 utilizing computing device state inputs with the security model 425. Depending upon an outcome of the evaluation, the decision engine 420 may grant or deny access to the requesting component 400 without seeking permission from the user. In contrast, some prior art systems interpose an access component 320 that immediately prompts a user for permission whenever a specific requesting component 400 has not yet been granted explicit access to a resource 310, 315 by the user.

The decision engine 420 receives input states from resource components 415. The input states may be applied to the security model 425 by the decision engine 420 assigning weights and/or a threshold level for each input. Each input may be compared directly to a threshold level set by the security model 425, may be combined with other inputs and compared to a threshold level set by the security model 425, or may be applied to affect the comparison of another weight with a threshold set by the security model 425.

The decision engine 420 may assign a weight to each of the input states. The weights may be initially defined by the security model 425, and in an aspect may be modified according to a current state of one or more resource components 415 on the computing device.

In an aspect, the decision engine 420 may modify an input weight based upon a level of an input from one or more of the resource components 415. For instance, a weight of an input may vary according to the state of another input. By way of example, a resource component 415 may comprise a clock/calendar feature of the computing device. The security model 425 may be initially defined to recognise a time of day as indicating whether the computing device is operative in a business mode or in a personal mode. A second resource component 415 may comprise, for instance, a Global Positioning System (GPS) unit that returns a physical location of the computing device. The security model 425 may apply as an input a location of the computing device to the weight of the clock/calendar input. If the computing device is located at a corporate address, the clock/calendar input is weighted to zero, causing the GPS unit input, e.g., the physical location, to override the clock/calendar input, to cause the computing device to be operative in the business mode.

By way of example, a user may have set their general permissions policy 430 to a relatively secure (paranoid) level such that they would like their device to protect them in an unsecured environment. When the user travels with their computing device, resource components 415 such as GPS, accelerometers or time may provide input to the decision engine 420. The inputs may indicate to the decision engine 420 parameters that are outside the norm for the user. For instance, the user's computing device may be travelling at a strange speed, in an unknown location, or travelling at a time when the user is typically stationary (such as at their desk at work). The decision engine 420 may apply these outlier parameters to security model 425 and determine that the computing device should be transitioned to a secure mode. Accordingly, while the user has only specified that they would generally like their device to be secure, the decision engine 420 has applied this general specification in determining that the computing device should transition to a secure mode since one or more inputs associated with states of the device are exhibiting parameters above a threshold level.

The general permissions policy 430 may specify a variety of criteria that may be applied through the security model 420. For instance, the general permissions policy 430 may specify a cost level authorised by the user. The decision engine 420 may apply the authorised cost level to the security model 425 to regulate applications operative on the computing device. For instance, a requesting component 400 may comprise an application seeking access to a resource 405 comprising a wireless communications subsystem of the computing device. The decision engine 420 may take as input a state of usage of the wireless communications subsystem and a calendar value to calculate a user's wireless communications cost for the month. Depending upon the general permissions policy 430, the decision engine 420 may throttle or restrict low priority applications from accessing the internet when a cost threshold has been exceeded. In an aspect, the decision engine 420 may be operative to alert the user, for instance through an audible or visual cue, that an application is attempting to access the wireless communications subsystem and the defined cost threshold may be breached. In an aspect, the decision engine 420 may require user input before granting access to the requesting component 400.

In an aspect, the general permissions policy 430 may specify a power profile that indicates a power consumption level of the computing device. For instance, a user may set the general permissions policy 430 to achieve maximum battery life. The decision engine 420 may apply the power consumption level to the security model 425 to regulate applications operative on the computing device. By way of example, where a maximum battery life criteria has been selected by a user, and a state of a battery of the computing device is limited, the decision engine 420 may curtail access to a wireless communications subsystem and limit access to high priority requesting components 400, such as a mail program operative on the computing device. Low priority applications, such as a driver update application, may be refused access or terminated until a battery state of the computing device indicates sufficient power to meet the criteria. For instance, for a user that plugs their computing device in at work, the decision engine 420 may refuse access requests from the low priority application (e.g., the driver update application) before the time the computing device is regularly charged, in anticipation of a likely period where the battery state of the computing device will have access to sufficient power (e.g., when the computing device is expected to be plugged in).

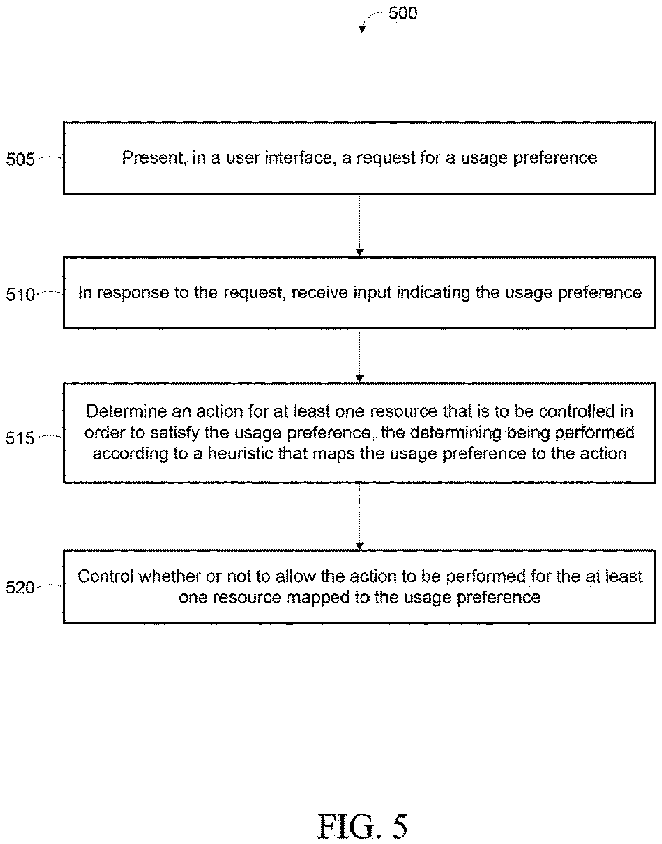

Further details of the above aspects will be described with reference to FIGS. 5 to 7.

In another aspect, the embodiments described herein can be considered as a method of enhancing the usability of a computing device. In traditional computing devices, input regarding security is typically received in a coarse-grained format. For example, the computing device may present a user interface requesting input as to whether a given application is to be granted or denied access to a given explicitly specified resource available on a computing device.

While coarse-grained security requests may be easier for a user of the computer device to understand, they are typically inflexible and do not allow the computing device to control resources in a manner that reflects general usage preferences that may be desired or preferred by the user of the computing device. For example, a security request may ask whether to grant or deny access to a specific resource for an application, even though it may not be desirable to grant or deny access for the resource to the application on a universal basis. Rather, the user may desire to grant access to the resource for the application in some situations (e.g., during working hours, and/or if the device is in a given geographic location), but deny access to the same resource in other situations.

Although it may be possible to present security requests in a more fine-grained manner (e.g., configure the computing device to specifically present a request that queries whether they would like to grant or deny access to a given resource in specific situations such as during work hours and/or when the device is in a given geographic location), presenting security requests in this manner may frustrate a user because the user would potentially be overwhelmed with a large number of fine-grained security requests relating to a large number of different situations.

The described embodiments ameliorate at least this concern by configuring a computing device to request a general usage preference that indicates a manner in which the computing device is preferred to be used. The computing device may then subsequently determine the fine-grained control that would satisfy the usage preference by referring to one or more heuristics that map the usage preference to a particular action for a resource of the computing device.

In various embodiments, the usage preference request itself may not explicitly identify the nature of the fine-grained control that is to be performed by the computing device (e.g., the specific actions that may be allowed, or denied, to be performed with respect to specific resources on the computing device) to satisfy the usage preference. Since a user may not necessarily be familiar with all the resources that could be controlled in order to satisfy the usage preference in any event, automatically mapping a fine-grained control to the more general usage preference may allow the usage preference to be satisfied without requiring the computing device to explicitly indicate to the user (or the user to explicitly indicate to the computing device) that the specific action to be controlled relates to the usage preference.

To illustrate the acts shown in FIGS. 5 - 7, an example usage preference of prolonging the battery life of a computing device will be referred to below. Additional example usage preferences will also be discussed below after FIGS. 5 - 7 have been described. Persons skilled in the art will understand that applications of the embodiments described herein are not limited to these examples, which are described herein for illustrative purposes only.

Referring to FIG. 5, shown there generally as 500 is a flowchart diagram illustrating a method of controlling actions associated with a plurality of resources available on a computing device, in at least one embodiment.

At 505, the computing device may present, in a user interface, a request for a usage preference that indicates a manner in which the computing device is preferred to be used. For example, the computing device may provide a request asking whether a usage preference of prolonging battery life (or conserving energy, etc.) is preferred.

The request may be presented at any one of various times during the operation of the computing device. For example, in some embodiments, the request may be presented during an initial setup phase when the computing device is first turned on (so that the computing device may determine the various usage preferences of the user of the computing device). Additionally or alternatively, a request may be presented when an operating system-initiated event indicates that the computing device is about to be used in a new manner. For example, if a computing device detects that it is moving at a speed typical of a vehicle on a highway or road, the computing device may present a request that allows input to indicate that a usage preference of providing assistance when the computing device is being transported in a vehicle is preferred.

It will be understood that the format of the request may vary. For example, the request may be provided in the form of a query or question. Further, the type of user interface in which the request is presented may be in any one or more of various forms, including a visual user interface and/or an audio-based user interface (e.g., voice controlled), for example. In some embodiments, the query may be pre-defined.

At 510, in response to the request, the computing device may receive input indicating the usage preference. The input may vary depending on the manner in which the request was presented in the user interface. For example, if the request was provided in the form of a general query or question, the input identifying the usage preference may comprise an answer to the query.

In another example, if the request is presented as a question in a visual user interface with a simple 'yes' or 'no' answer (e.g., "Would you like the computing device to prolong the battery life as much as possible?"), the user interface may have been provided with 'yes' and 'no' buttons or other controls that correspond respectively to whether the usage preference is preferred or not. In various alternative embodiments, the request may present a number of options that reflect different settings for a usage preference, and the input may be the setting selected amongst the options presented.

At 515, the computing device may determine an action for at least one resource of the plurality of resources that is to be controlled in order to satisfy the usage preference. The determining may be performed according to a heuristic that maps the usage preference to the action for the at least one resource.

The heuristics implemented in embodiments described herein may generally be provided in the form of mappings between a usage preference and one or more actions associated with one or more resources. In various embodiments, the heuristics may be stored as an entry in a lookup table and/or a row in a database table, for example. It will be understood that any other suitable data structure and/or algorithm capable of allowing for the determination of an action for at least one resource from a usage preference may also be used.

The mappings provided in the heuristics provide an indication to the computing device of specific resources, and corresponding actions with respect to the resources, that can be controlled so that the computing device may be able to satisfy the usage preference. Actions may be any behavior that an application or a process, for example, may attempt to perform on the computing device that affects the operation of the resource on the computing device. For example, an action may include accessing the at least one resource or modifying a setting associated with the at least one resource.

In the example where the usage preference relates to the prolonging of the battery life of the computing device, the mappings may indicate that resources such as the vibration function of the computing device, the screen brightness of a display of the computing device, and/or usage of the wireless radios of a computing device, are resources that affect the ability of the computing device to satisfy the usage preference of prolonging battery life. The corresponding actions for the various resources that may be controlled in order to satisfy the usage preference may then include, for example: activating a vibration function; modifying the brightness of the display; and/or using the wireless radios.

In various embodiments, the request for the usage preference or the input identifying the usage preference does not explicitly indicate the action for the at least one resource to be controlled in order to satisfy the usage preference. For example, consider the case where the usage preference relates to prolonging the battery life of the computing device, and a corresponding action of modifying the brightness setting of a screen on the computing device. In this case, the request might only *generally* refer to the prolonging of battery life without explicitly indicating that simple actions associated with the brightness of the screen are to be controlled. However, the computing device (e.g., decision engine 420 of FIGS. 4a, 4b) may subsequently automatically control access to the brightness of the screen in order to satisfy the usage preference after application of heuristics (e.g., embodied in security model 425). Similarly, the request or the input indicating the usage preference may also not explicitly indicate that actions involving activating a vibration function and/or usage of the wireless radios may be controlled in order to satisfy the usage preference of prolonging battery life of the computing device. The usage preference request and answer are typically of a general nature, and the specific actions and/or their associated resources to be controlled may be determined only after the application of the appropriate heuristics.

Put another way, by providing the mappings from the general usage preference to the particular actions in respect of particular resources, the heuristics in effect 'translate' the general preferred behavior for the computing device indicated by the usage preference into one or more specific actions that can be controlled to cause the preferred behavior to be achieved. In accordance with at least one embodiment described herein, this is accomplished by posing a request for a usage preference of a general nature in the user interface, wherein the user interface need not explicitly indicate any of the specific actions that are to be performed. Through this translation process from a general usage preference to specific actions that may be controlled to satisfy the usage preference, the computing device avoids potentially overwhelming a user with a large number of highly-granular security requests that may lead to user frustration.

While the action that is to be controlled in order to satisfy the usage preference may not be explicitly indicated in the request or the input indicating the usage preference, the resource to which the action relates may nevertheless still be identified in the request and/or input in some embodiments. For example, there may be some usage preferences that are so closely related to a resource that the request and/or the input indicating the usage preference would not otherwise be comprehensible without identifying the resource. In these types of usage preferences, although the resource may be identified, the action that is to be controlled to satisfy the general usage preference may still not be readily discernible to the user being presented with the request. For example, if the usage preference was to restrict the tracking of keystrokes entered on a keyboard of the computing device, the resource of the keystroke-tracking API may be discernible from the usage preference itself. However, the specific actions that may be allowed or denied to achieve the restriction of keystroke-tracking (e.g., denying access to the keystroke-tracking API when non-native applications are being executed) may not be explicitly indicated in the request.

In further embodiments, the resource itself may not even be explicitly indicated in the request and/or the input identifying the usage preference. For example, it may be the case that there are resources of the computing device that the heuristic will indicate should be controlled to satisfy the usage preference, but which would not be readily apparent from the request or the input indicating the usage preference themselves. Continuing on with the example of prolonging battery life for a computing device, the screen brightness of the computing device may not be explicitly indicated in the usage preference of prolonging battery life as a resource that is to be controlled. Nevertheless, the computing device may ultimately control the screen brightness because the heuristic indicates that controlling actions associated with the screen brightness may allow the usage preference to be satisfied.

At 520, the computing device controls whether or not to allow the action to be performed for the at least one resource mapped to the usage preference.

In various embodiments, application of the heuristic may involve consideration of one or more states of the computing device when controlling whether or not to allow the action to be performed for the at least one resource, in order to satisfy the usage preference. For example, if there are a number of different actions for the at least one resource, the consideration may involve determining which action amongst the plurality of actions is allowed to be performed depending on a state of the device. In further embodiments, the consideration may involve determining whether actions associated with certain other resources are to be controlled in order to satisfy the usage preference depending on a state of the device.

It will be understood that as used herein, the term "state" of a computing device and "input state" may be used interchangeably herein.

For example, in the scenario where the usage preference is to prolong the battery life of the computing device, there may be multiple actions associated with setting the brightness of a screen to different levels (e.g., setting the screen brightness to a low level, a medium level, or a high level, for example). Attempts to perform these actions may be made / initiated by an application or process on the computing device, for example. The percentage of battery charge remaining in the battery may then serve as an input state in determining which action amongst these actions is to be allowed to be performed. In one example configuration, if the input state indicates that the battery is '100%' charged, it may be determined that the action of setting the screen brightness to a high level is allowed to be performed (e.g., an application may attempt to maximize screen brightness to allow the screen to more easily viewed).

As the battery drains, the input state (i.e. the state of current battery charge on the device) may then indicate that a battery level of '75%' is reached. The computing device may then determine that only the actions of setting the screen brightness to a medium level or lower is allowed to be performed (e.g., to reduce the speed at which the battery is being depleted). In this scenario, if an application attempts to request the screen brightness to be higher than the medium level, the request may be denied.

If the battery drains further so that the input state indicates that the battery is only '50%' charged, the computing device may further determine that only the actions of setting the screen brightness to a low level is allowed to be performed (e.g., to further slow the depletion of the battery and prolong battery life as much as possible). Any requests to set the screen brightness to a medium or high level may then be denied.

In various embodiments, the determination of whether or not to allow an action to be performed may be made when an application is first executed.

Additionally or alternatively, the determination may be made periodically during the execution of an application or a process (e.g., upon a trigger event generated by the operating system of the mobile device). In the above example where the usage preference is to prolong the battery life of the computing device, the trigger event may be a signal provided by the operating system that indicates when the battery has been depleted to a defined level of charge (e.g., 75% charge remaining or 50% charge remaining). When such trigger event is received by the decision engine (see e.g., decision engine 420 of FIG. 4), the determination of whether an action (e.g., setting the screen brightness to a high level) is allowed to be performed may be made so that, for example, when the application next attempts to perform the action, the action will be allowed or denied accordingly.

In various embodiments, the consideration of the one or more states of the computing device as input may additionally or alternatively involve determining whether the one or more states allow the usage preference to be satisfied, and if the one or more states do not allow the usage preference to be satisfied, then the decision engine may not control the action for the at least one resource.

Again referring to the example where the usage preference is to prolong the battery life of the computing device, another state of the computing device that may affect the ability of the computing device to satisfy the usage preference may be whether or not the computing device is plugged in (for example, to a charger, power outlet, or other power source, etc.). If the computing device is in a state where the computing device is plugged in, this state may not allow the usage preference of prolonging battery life to be satisfied because the battery would not need to be prolonged, since it will not deplete and will always be fully charged. The computing device may then determine that since the condition of the one or more states allowing the usage preference to be satisfied is not met, the computing device need not control (e.g., allow or deny) any requested actions for the at least one resource (e.g., there is no need to deny requests to maximize the screen brightness of a display of the computing device).

Heuristics that provide the various mappings discussed herein may generally be stored (e.g., implemented as a set of rules or other logic) on a memory of the computing device. The heuristics may form part of the security model 425 shown in FIG. 4 provided by the operating system of the computing device, and may be pre-loaded onto a computing device at the time of manufacture. In various embodiments, the heuristics may also be updated remotely through an operating system update or patch, via wired or wireless connection, for example. Additionally or alternatively, the heuristics may be provided in the form of an updatable security policy, which may be provided by Information Technology (IT) administration personnel within an organization associated with the computing device, for example.

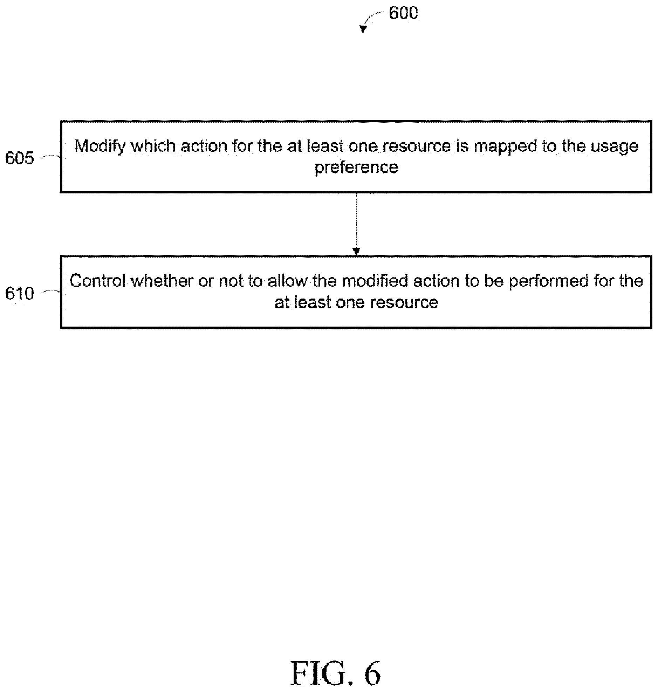

Referring to FIG. 6, shown there generally as 600 is a flowchart diagram illustrating a process of modifying which action for the at least resource is mapped to a usage preference, in accordance with at least one embodiment.

The mappings of the heuristics generally specify a usage preference and at least one action for one or more resources that may be allowed or denied in order to satisfy the usage preference. It will be understood that various aspects of the mappings may be modified when the heuristics are updated.

For example, when varying aspects of the usage preference, the phrasing of a query for a usage preference presented in the user interface may be modified. Additionally or alternatively, the trigger event that causes the request to be presented in a user interface for the first time may also be modified.

Also, the action to be controlled with respect to a particular resource and/or the resource that can be controlled in order to satisfy the usage preference may also be modified.

At 605, the computing device may modify which action for the at least one resource is mapped to the usage preference. For example, this may be in response to the computing device receiving an operating system patch with an update for a particular heuristic, for example.

In the example scenario where the usage preference is to prolong the battery life of the computing device, it may be discovered after the implementation of an original mapping to control access to a high brightness setting of the display, that an even higher brightness setting for the display of the computing device may be possible. To allow the computing device to better satisfy the usage preference of prolonging battery life, the update may then modify the action to control access to the even higher brightness setting of the display of the computing device.

At 610, the computing device may then control whether or not to allow the modified action to be performed for the at least one resource identified in act 605. In various embodiments, the controlling of the modified action may be conducted in a manner that is similar to act 520 of FIG. 5. For example, one or more states of the computing device (e.g., battery charge, whether the device is plugged in to an external power source, etc.) can be considered by the computing device when the computing device controls whether or not to allow the modified action to be performed for the at least one resource.

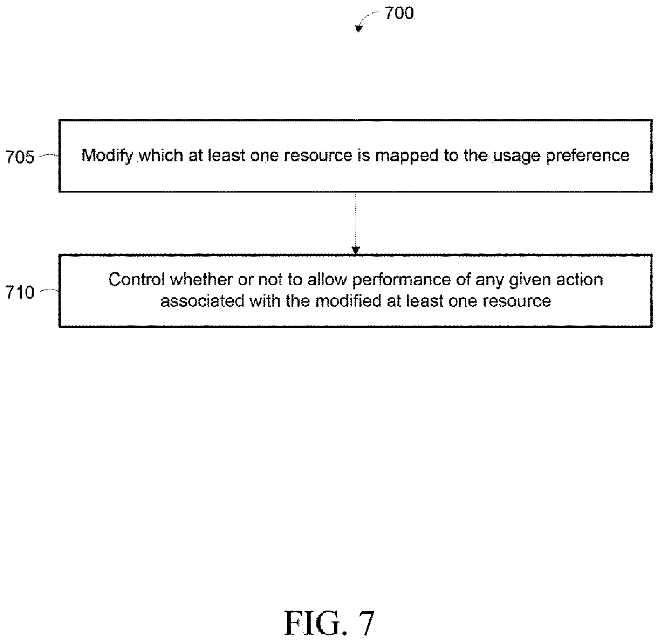

Referring to FIG. 7, shown there generally as 700 is a flowchart diagram illustrating a process of modifying which at least one resource is mapped to the usage preference, in accordance with at least one embodiment. The acts illustrated in FIG. 7 are similar to those which are illustrated in FIG. 6, except that it is the identification of the resource in the heuristic that is modified in the mapping of actions for at least one resource to the usage preference. It will be understood that the process of "modifying" which at least resource is mapped to the usage preference may include adding or deleting new resources for which actions can be controlled, and not just the alteration of existing resources that are already mapped to the usage preference.

At 705, the computing device may modify which at least one resource is mapped to the usage preference. As with act 605 in FIG. 6, this may be in response to the computing device receiving an operating system patch with an update for a particular heuristic, for example.

The modifying of which resources are mapped to the usage preference may be desirable, for example, when new heuristics are to be implemented that identify other resources for which actions are to be controlled in order to satisfy the usage preference. Continuing on with the example of the usage preference indicating that battery life is to be prolonged, it may be discovered that controlling the number of background processes that are executing on the computing device may alternatively or additionally be performed in order to satisfy the usage preference of prolonging battery life. In this scenario, the mappings for the usage preference of prolonging battery life may be modified to indicate that the executing background processes may also be controlled in order to satisfy the usage preference, for example.

At 710, the computing device may control whether or not to allow performing of any given action associated with the modified at least one resource identified in act 705. As with act 610 in FIG. 6, this control may be conducted in a manner similar to act 520 in FIG. 5. Particularly, various states of the computing device may be taken into consideration as input when controlling whether any given action associated with the modified at least one resource is to be performed.

As will be understood, the embodiments described herein generally allow a user of a computing device to answer a general question or provide general input regarding how they would like to use their device, which leads to an identification of a usage preference. The computing device can respond by controlling whether or not to allow specific actions associated with various resources of the computing device to be performed (as defined by a heuristic), with the allowance or denial resulting in the usage preference being satisfied. The general request and/or input indicating the usage preference need not explicitly identify the actions that can be controlled in order to satisfy the usage preference because the computing device stores and employs the heuristics, which embody mappings between the usage preference and the specific actions that may be controlled in order to satisfy the usage preference.

To further illustrate the described embodiments, additional example applications of heuristics that map usage preferences to actions associated with one or more resources will now be discussed.

In one example, the usage preference may be to limit wireless carrier costs incurred when the computing device is "roaming" (e.g., when the computing device is a mobile communications device that may be associated with a wireless carrier account, and the computing device accesses wireless carriers outside of a designated local area). In this example, the heuristic may identify and map the usage preference to various actions associated with resources that would incur wireless carrier costs when the computing device is roaming. For example, these resources may include: components used to create or communicate (e.g., send or receive) short message service (SMS) or other messages, components that enable telephone calls, and/or components that provide data services. The heuristic may then further map the general usage preference to limit wireless carrier costs when roaming to at least one of the following actions that may be controlled in order to satisfy the usage preference: sending or receiving an SMS message, conducting telephone calls, and/or using data services while the device is roaming.

As discussed, when controlling whether or not to allow these various actions to be performed (e.g., act 520 of FIG. 5), the computing device may consider various states of the computing device. In the scenario where the usage preference is to limit wireless carrier costs while the computing device is roaming, these states may include determining the name of the wireless carrier that the computing device is connected to, and/or the geographic location of the computing device, for example.

As discussed, the determination of whether an action is allowed to be performed may be made upon a trigger event. In this case, the entering of the device into a roaming area (e.g., as determined via the computing device connecting to a network with an unfamiliar wireless carrier name, or via the geographic sensor signaling that the computing device exited a geographic region associated with the local wireless carrier) may cause a trigger event to be generated by the operating system. The trigger event may result in a re-determination of whether the actions associated with reducing wireless carrier costs are to be allowed, such that if an application subsequently attempts to perform such actions (e.g., if the application attempts to conduct a telephone call), that action may not be allowed to be performed.

Conversely, if a trigger event indicates that the device has re-entered a local region (e.g., via connection to a local wireless carrier and/or via the geographic sensor signaling that the computing device is within the local geographic region), the decision engine may determine that the computing device may stop controlling the actions mapped to the usage preference.

In another example, the usage preference may be to provide assistance to the occupants of a vehicle when the computing device is being transported in the vehicle. In this example, the heuristic may map the usage preference of providing assistance to the occupants of a vehicle to resources that can be controlled to assist a driver that is operating the vehicle, and/or resources that ensure the safety of the driver. For example, these resources may include an ability to enter text through a keyboard of the computing device, and/or the speaker volume on the computing device. To satisfy the usage preference, the heuristic may then map the usage preference to at least one of the following actions: accessing a keyboard on the computing device (e.g., the decision engine may deny access to a keyboard to enhance driver security by preventing a driver of the vehicle from being distracting during operation of the vehicle), and adjusting the volume on the computing device (e.g., the decision engine may deny requests from other applications/processes to adjust the volume so that the computing device maintains a high volume, so as to be more easily heard during increased noise levels when the computing device is being transported in a vehicle).

The heuristic may also indicate states of the computing device that are to be considered by the computing device when controlling whether or not to allow an action to be performed. As discussed, the determination of whether an action is allowed to be performed may be conducted upon a trigger event from the operating system of the computing device. In the example where the usage preference is to provide assistance when the computing device is being transported in a vehicle, an example trigger event may be the activation of a GPS navigation application. Such trigger event may result in the actions indicated above (e.g., accessing a keyboard or adjusting a speaker volume) being denied.

In a further example, the usage preference may be to restrict the tracking of keystrokes entered on a keyboard of the computing device. In this example, the heuristic may map the usage preference to at least one of the following resources: an API of the operating system that allows the tracking of keystrokes, and the accelerometer of the computing device (which may be used to track keystrokes by way of interpreting the motion sensed by the accelerometer). The heuristic may then further map the usage preference to at least one of the following actions: accessing the API of the operating system that allows the tracking of keystrokes, and reading information from the accelerometer of the computing device.

The systems and methods disclosed herein are presented only by way of example and are not meant to limit the scope of the subject matter described herein. Other variations of the systems and methods described above will be apparent to those in the art and as such are considered to be within the scope of the subject matter described herein. For example, it should be understood that acts and the order of the acts performed in the processing described herein may be altered, modified and/or augmented yet still achieve the preferred outcome.

As used herein, the wording "and/or" is intended to represent an inclusive-or. That is, "X and/or Y" is intended to mean X or Y or both. Moreover, "X, Y, and/or Z" is intended to mean X or Y or Z or any combination thereof.

The data of the systems and methods described herein may be stored in one or more data stores. The data stores can be of many different types of storage devices and programming constructs, such as RAM, ROM, flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the operations of the described methods, and implement the systems described herein.

The computer components, software modules, functions and data structures described herein may be connected directly or indirectly to each other in order to allow the flow of data needed for their operations. It is also noted that a module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code.

## Claims

1. A method of controlling actions associated with a plurality of resources available on a computing device, the method comprising:
presenting (505), in a user interface, a request for one or more answers to one or more questions wherein the one or more answers reflect a usage preference that indicates a manner in which the computing device is preferred to be used;
in response to the request, receiving (510) input answers indicating the usage preference; the answers defining a general permissions policy; processing, by a decision engine (420), the general permission policy to generate a model, the model operable to regulate one or more applications on the computing device;
determining (515) an action for at least one resource of the plurality of resources that is to be controlled in order to satisfy the usage preference, wherein the determining is performed according to application of a heuristic of the model that maps the usage preference to the action for the at least one resource, application of the heuristic involving consideration of one or more states of the computing device when controlling whether or not to allow the action to be performed for the at least one resource, in order to satisfy the usage preference; and controlling (520) through the model whether or not to allow the action to be performed for the at least one resource mapped to the usage preference;
wherein the one or more questions for the usage preference or the input answers identifying the usage preference do not explicitly indicate that the determined action for the at least one resource is to be controlled in order to satisfy the usage preference.

2. The method of claim 1, wherein the one or more questions for the usage preference or the input answers identifying the usage preference do not explicitly indicate one or more actions associated with the at least one resource that are to be controlled to satisfy the usage preference.

3. The method of claim 1 or claim 2, wherein one or more states of the computing device are considered when controlling whether or not to allow the action to be performed for the at least one resource.

4. The method of claim 3, wherein the action for the at least one resource is selected from a plurality of actions for the at least one resource based on the one or more states of the computing device.

5. The method of any one of claims 1 to 4, wherein the heuristic is modifiable (605) as to which action of a plurality of actions for the at least one resource is mapped to the usage preference.

6. The method of claim 5, wherein if the action for the at least one resource mapped to the usage preference is modified, the method further comprises controlling (610) whether or not to allow the modified action to be performed for the at least one resource.

7. The method of any one of claims 1 to 6, wherein the heuristic is modifiable (705) as to which resources are mapped to the usage preference.

8. The method of claim 7, wherein if the at least one resource mapped to the usage preference is modified, the method further comprises controlling (710) whether or not to allow performance of any given action associated with the modified at least one resource.

9. The method of any one of claims 1 to 8, wherein the usage preference comprises prolonging battery life of the computing device, and wherein the action for the at least one resource comprises at least one of: activating a vibration function of the computing device, modifying a brightness of a display of the computing device, or using a wireless radio on the computing device.

10. The method of any one of claims 1 to 9, wherein the usage preference comprises limiting wireless carrier costs incurred when the computing device is roaming, and wherein the action for the at least one resource comprises at least one of: creating a message, communicating a message, conducting a telephone call, or accessing a data service.

11. The method of any one of claims 1 to 10, wherein the usage preference comprises providing assistance when the computing device is being transported in a vehicle, and wherein the action for the at least one resource comprises at least one of: accessing a keyboard on the computing device, or adjusting a speaker volume on the computing device.

12. The method of any one of claims 1 to 11, wherein the usage preference comprises restricting the tracking of keystrokes entered on a keyboard of the computing device, and wherein the action for the at least one resource comprises at least one of: accessing a keystroke-tracking Application Programming Interface (API), or reading information from the accelerometer of the computing device.

13. A computing device comprising a processor and a memory, wherein the processor is configured to perform the method of any one of claims 1 to 12.

14. A computer-readable storage medium comprising instructions, which when executed by a processor of a computing device, cause the processor to perform the method of any one of claims 1 to 12.

## Patentansprüche

1. Verfahren zur Steuerung von Aktionen, die mit einer Mehrzahl von Ressourcen assoziiert sind, die auf einer Datenverarbeitungsvorrichtung verfügbar sind, wobei das Verfahren umfasst:
Präsentieren (505) einer Anforderung von einer oder mehreren Antworten auf eine oder mehrere Fragen in einer Benutzeroberfläche, wobei die eine oder die mehreren Antworten eine Nutzungspräferenz widerspiegeln, die eine Weise angibt, auf die das Verwenden der Datenverarbeitungsvorrichtung bevorzugt ist;
als Reaktion auf die Anforderung Empfangen (510) von eingegebenen Antworten, die die Nutzungspräferenz angeben; wobei die Antworten eine allgemeine Berechtigungsrichtlinie definieren;
Verarbeiten der allgemeinen Berechtigungsrichtlinie durch eine Entscheidungsmaschine (420), um ein Modell zu erzeugen, wobei das Modell dazu betreibbar ist, eine oder mehrere Anwendungen auf der Datenverarbeitungsvorrichtung zu regulieren;
Bestimmen (515) einer Aktion für mindestens eine Ressource der Mehrzahl von Ressourcen, die gesteuert werden soll, um die Nutzungspräferenz zu erfüllen, wobei das Bestimmen gemäß einer Anwendung einer Heuristik des Modells durchgeführt wird, die die Nutzungspräferenz auf die Aktion für die mindestens eine Ressource abbildet,
wobei die Anwendung der Heuristik eine Berücksichtigung von einem oder mehreren Zuständen der Datenverarbeitungsvorrichtung beinhaltet, wenn gesteuert wird, ob ein Durchführen der Aktion für die mindestens eine Ressource zugelassen wird oder nicht, um die Nutzungspräferenz zu erfüllen; und
Steuern (520) durch das Modell, ob ein Durchführen der Aktion für die mindestens eine Ressource, die auf die Nutzungspräferenz abgebildet ist, zugelassen wird oder nicht;
wobei die eine oder die mehreren Fragen für die Nutzungspräferenz oder die eingegebenen Antworten, die die Nutzungspräferenz identifizieren, nicht explizit angeben, dass die bestimmte Aktion für die mindestens eine Ressource gesteuert werden soll, um die Nutzungspräferenz zu erfüllen.

2. Verfahren nach Anspruch 1, wobei die eine oder die mehreren Fragen für die Nutzungspräferenz oder die eingegebenen Antworten, die die Nutzungspräferenz identifizieren, nicht explizit eine oder mehrere Aktionen angeben, die mit der mindestens einen Ressource assoziiert sind und die gesteuert werden sollen, um die Nutzungspräferenz zu erfüllen.

3. Verfahren nach Anspruch 1 oder 2, wobei ein oder mehrere Zustände der Datenverarbeitungsvorrichtung berücksichtigt werden, wenn gesteuert wird, ob ein Durchführen der Aktion für die mindestens eine Ressource zugelassen wird oder nicht.

4. Verfahren nach Anspruch 3, wobei die Aktion für die mindestens eine Ressource aus einer Mehrzahl von Aktionen für die mindestens eine Ressource auf der Basis des einen oder der mehreren Zustände der Datenverarbeitungsvorrichtung ausgewählt wird.

5. Verfahren nach einem der Ansprüche 1 bis 4, wobei die Heuristik dahingehend modifizierbar ist (605), welche Aktion einer Mehrzahl von Aktionen für die mindestens eine Ressource auf die Nutzungspräferenz abgebildet wird.

6. Verfahren nach Anspruch 5, wobei, wenn die Aktion für die mindestens eine Ressource, die auf die Nutzungspräferenz abgebildet wird, modifiziert wird, das Verfahren weiterhin ein Steuern (610) umfasst, ob ein Durchführen der modifizierten Aktion für die mindestens eine Ressource zugelassen wird oder nicht.

7. Verfahren nach einem der Ansprüche 1 bis 6, wobei die Heuristik dahingehend modifizierbar ist (705), welche Ressourcen auf die Nutzungspräferenz abgebildet werden.

8. Verfahren nach Anspruch 7, wobei, wenn die mindestens eine Ressource, die auf die Nutzungspräferenz abgebildet wird, modifiziert wird, das Verfahren weiterhin ein Steuern (710) umfasst, ob eine Durchführung einer beliebigen gegebenen Aktion, die mit der modifizierten mindestens einen Ressource assoziiert ist, zugelassen wird oder nicht.

9. Verfahren nach einem der Ansprüche 1 bis 8, wobei die Nutzungspräferenz ein Verlängern der Batterielebensdauer der Datenverarbeitungsvorrichtung umfasst und wobei die Aktion für die mindestens eine Ressource mindestens eines von: Aktivieren einer Vibrationsfunktion der Datenverarbeitungsvorrichtung, Modifizieren einer Helligkeit einer Anzeige der Datenverarbeitungsvorrichtung oder Verwenden eines drahtlosen Funks an der Datenverarbeitungsvorrichtung umfasst.

10. Verfahren nach einem der Ansprüche 1 bis 9, wobei die Nutzungspräferenz ein Einschränken von drahtlosen Trägerkosten, die anfallen, wenn die Datenverarbeitungsvorrichtung roamt, umfasst und wobei die Aktion für die mindestens eine Ressource mindestens eines von: Erstellen einer Nachricht, Kommunizieren einer Nachricht, Vornehmen eines Telefonanrufs oder Zugreifen auf einen Datendienst umfasst.

11. Verfahren nach einem der Ansprüche 1 bis 10, wobei die Nutzungspräferenz ein Bereitstellen von Hilfe, wenn die Datenverarbeitungsvorrichtung in einem Fahrzeug transportiert wird, umfasst und wobei die Aktion für die mindestens eine Ressource mindestens eines von: Zugreifen auf eine Tastatur an der Datenverarbeitungsvorrichtung oder Einstellen einer Lautsprecherlautstärke an der Datenverarbeitungsvorrichtung umfasst.

12. Verfahren nach einem der Ansprüche 1 bis 11, wobei die Nutzungspräferenz ein Einschränken des Verfolgens von Tastenanschlägen, die auf einer Tastatur der Datenverarbeitungsvorrichtung eingegeben werden, umfasst und wobei die Aktion für die mindestens eine Ressource mindestens eines von: Zugreifen auf eine Tastenanschlagverfolgung-Anwendungsprogrammierschnittstelle (API) oder Lesen einer Information aus dem Beschleunigungsmesser der Datenverarbeitungsvorrichtung umfasst.

13. Datenverarbeitungsvorrichtung, die einen Prozessor und einen Speicher umfasst, wobei der Prozessor dazu konfiguriert ist, das Verfahren nach einem der Ansprüche 1 bis 12 durchzuführen.

14. Computerlesbares Speichermedium, das Anweisungen umfasst, die bei Ausführung durch einen Prozessor einer Datenverarbeitungsvorrichtung bewirken, dass der Prozessor das Verfahren nach einem der Ansprüche 1 bis 12 durchführt.

## Revendications

1. Procédé de commande d'actions associées à une pluralité de ressources disponibles sur un dispositif informatique, le procédé comprenant :
présenter (505), dans une interface utilisateur, une requête pour une ou plusieurs réponses à une ou plusieurs questions, la ou les réponses reflétant une préférence d'utilisation qui indique une manière préférée d'utiliser le dispositif informatique ;
en réponse à la requête, recevoir (510) des réponses d'entrée indiquant la préférence d'utilisation ; les réponses définissant une politique d'autorisation générale ;
traiter, par un moteur de décision (420), la politique d'autorisation générale pour générer un modèle, le modèle étant fonctionnel pour réguler une ou plusieurs applications sur le dispositif informatique ;
déterminer (515) une action pour au moins une ressource de la pluralité de ressources qui doit être commandée de façon à satisfaire la préférence d'utilisation, la détermination étant réalisée selon l'application d'une heuristique du modèle qui mappe la préférence d'utilisation à l'action pour l'au moins une ressource, l'application de l'heuristique impliquant la prise en considération d'un ou plusieurs états du dispositif informatique lors de la commande du point de savoir s'il faut ou non permettre la réalisation de l'action pour l'au moins une ressource, de façon à satisfaire la préférence d'utilisation ; et
commander (520), par l'intermédiaire du modèle, le point de savoir s'il faut ou non permettre la réalisation de l'action pour l'au moins une ressource mappée à la préférence d'utilisation ;
la ou les questions pour la préférence d'utilisation ou les réponses d'entrée identifiant la préférence d'utilisation n'indiquant pas explicitement que l'action déterminée pour l'au moins une ressource doit être commandée de façon à satisfaire la préférence d'utilisation.

2. Procédé selon la revendication 1, dans lequel la ou les questions pour la préférence d'utilisation ou les réponses d'entrée identifiant la préférence d'utilisation n'indiquent pas explicitement une ou plusieurs actions associées à l'au moins une ressource qui doivent être commandées pour satisfaire la préférence d'utilisation.

3. Procédé selon la revendication 1 ou la revendication 2, dans lequel un ou plusieurs états du dispositif informatique sont pris en considération lors de la commande du point de savoir s'il faut ou non permettre la réalisation de l'action pour l'au moins une ressource.

4. Procédé selon la revendication 3, dans lequel l'action pour l'au moins une ressource est sélectionnée parmi une pluralité d'actions pour l'au moins une ressource sur la base du ou des états du dispositif informatique.

5. Procédé selon l'une quelconque des revendications 1 à 4, dans lequel l'heuristique peut être modifiée (605) quant à quelle action d'une pluralité d'actions pour l'au moins une ressource est mappée à la préférence d'utilisation.

6. Procédé selon la revendication 5, dans lequel, si l'action pour l'au moins une ressource mappée à la préférence d'utilisation est modifiée, le procédé comprend en outre la commande (610) du point de savoir s'il faut ou non permettre la réalisation de l'action modifiée pour l'au moins une ressource.

7. Procédé selon l'une quelconque des revendications 1 à 6, dans lequel l'heuristique peut être modifiée (705) quant à quelles ressources sont mappées à la préférence d'utilisation.

8. Procédé selon la revendication 7, dans lequel si l'au moins une ressource mappée à la préférence d'utilisation est modifiée, le procédé comprend en outre la commande (710) du point de savoir s'il faut ou non permettre la réalisation d'une quelconque action donnée associée à l'au moins une ressource modifiée.

9. Procédé selon l'une quelconque des revendications 1 à 8, dans lequel la préférence d'utilisation comprend le prolongement de la durée de vie de batterie du dispositif informatique, et dans lequel l'action pour l'au moins une ressource comprend au moins l'une parmi : l'activation d'une fonction de vibration du dispositif informatique, la modification d'une luminosité d'un dispositif d'affichage du dispositif informatique, ou l'utilisation d'une radio sans fil sur le dispositif informatique.

10. Procédé selon l'une quelconque des revendications 1 à 9, dans lequel la préférence d'utilisation comprend la limitation des coûts de porteuse sans fil encourus lorsque le dispositif informatique est en itinérance, et dans lequel l'action pour l'au moins une ressource comprend au moins l'un parmi : la création d'un message, la communication d'un message, la conduite d'un appel téléphonique, ou l'accès à un service de données.

11. Procédé selon l'une quelconque des revendications 1 à 10, dans lequel la préférence d'utilisation comprend la fourniture d'une assistance lorsque le dispositif informatique est transporté dans un véhicule, et dans lequel l'action pour l'au moins une ressource comprend au moins l'un parmi : l'accès à un clavier sur le dispositif informatique, ou l'ajustement d'un volume de haut-parleur sur le dispositif informatique.

12. Procédé selon l'une quelconque des revendications 1 à 11, dans lequel la préférence d'utilisation comprend la limitation du suivi de frappes entrées sur un clavier du dispositif informatique, et dans lequel l'action pour l'au moins une ressource comprend au moins l'un parmi : l'accès à une interface de programmation d'application (API) de suivi de frappes, ou la lecture d'informations provenant de l'accéléromètre du dispositif informatique.

13. Dispositif informatique comprenant un processeur et une mémoire, le processeur étant configuré pour réaliser le procédé selon l'une quelconque des revendications 1 à 12.

14. Support de stockage lisible par ordinateur comprenant des instructions qui, lorsqu'elles sont exécutées par un processeur d'un dispositif informatique, amènent le processeur à réaliser le procédé selon l'une quelconque des revendications 1 à 12.
